# EUROPEAN PATENT SPECIFICATION

(11) **EP 3 568 904 B1**
(45) Date of publication and mention of the grant of the patent: **11.11.2020**
(21) Application number: 17700924.8
(22) Date of filing: 11.01.2017
(51) Int. Cl.: H02M 1/32, H02J 3/36

(54) **METHOD AND SYSTEM FOR FAULT HANDLING IN A DC POWER TRANSMISSION SYSTEM**
VERFAHREN UND SYSTEM ZUR FEHLERHANDHABUNG IN EINEM GLEICHSTROMÜBERTRAGUNGSSYSTEM
PROCÉDÉ ET SYSTÈME DE GESTION DE DÉFAUT DANS UN SYSTÈME DE TRANSMISSION DE PUISSANCE EN COURANT CONTINU

(43) Date of publication of application: 20.11.2019
(73) Proprietor: ABB Power Grids Switzerland AG, 5400 Baden (CH)
(72) Inventor: JIANG-HÄFNER, Ying, 771 42 Ludvika (SE)
(74) Representative: AWA Sweden AB
(86) International application number: PCT/EP2017/050503
(87) International publication number: WO 2018/130280

(56) References cited:
- EP-A1- 3 070 807
- WO-A1-2015/057940
- NAVID R ZARGARI ET AL: "A Multilevel Thyristor Rectifier with Improved Power Factor", IEEE TRANSACTIONS ON INDUSTRY APPLICATIONS, IEEE SERVICE CENTER, PISCATAWAY, NJ, US, vol. 33, no. 5, 1 October 1997 (1997-10-01), XP011022288, ISSN: 0093-9994
- OMAR KOTB ET AL: "A hybrid HVDC transmission system supplying a passive load", ELECTRIC POWER AND ENERGY CONFERENCE (EPEC), 2010 IEEE, IEEE, PISCATAWAY, NJ, USA, 25 August 2010 (2010-08-25), pages 1-5, XP031856880, ISBN: 978-1-4244-8186-6
- Yanting Wang ET AL: "A Novel Hybrid Directional Comparison Pilot Protection Scheme for the LCC-VSC Hybrid HVDC Transmission Lines", 13th International Conference on Development in Power System Protection 2016 (DPSP), 1 January 2016 (2016-01-01), page 6, XP055528793, DOI: 10.1049/cp.2016.0112 ISBN: 978-1-78561-138-4
- HOWELL STEVEN ET AL: "Unidirectional HVdc Topology With DC Fault Ride-Through Capability", CANADIAN JOURNAL OF ELECTRICAL AND COMPUTER ENGINEERING/REVUE CANADIENNE DE GENIE ELECTRIQUE AND INFORMATIQUE, ENGINEERING, USA, vol. 40, no. 1, 1 January 2017 (2017-01-01), pages 41-49, XP011642653, ISSN: 0840-8688, DOI: 10.1109/CJECE.2016.2629460 [retrieved on 2017-03-10]

## Description

### Technical field

The present disclosure generally relates to the field of power transmission systems. More specifically, the present disclosure relates to methods and systems for fault handling in direct current power transmission between alternating current systems.

### Background

Due to their lower losses and costs, direct current (DC) power transmission systems have become the preferred option over their alternating current (AC) competitors for bulk transmission of high-voltage electrical power. In modern high-voltage DC (HVDC) power transmission systems (with voltages of several hundred kV), the power may reach several gigawatts in size and be transferred over distances of up to several thousands of kilometers.

Due to their relatively low costs and low losses, current-source converters (CSCs), using thyristors as switching devices, are widely used in HVDC applications to convert between AC and DC power. Due to the CSCs not being self-commutating, HVDC converters based on CSCs may however be sensitive to commutation failures that may occur for example during AC voltage dips, and that in turn may trigger commutation failures in other interconnected HVDC converters leading to unacceptable power system disturbances.

With recent development of semiconductor technology, voltage-source converters (VSCs), using e.g. insulated-gate bipolar transistors (IBGTs) as switching devices, have gained in popularity. Being self-commutating, VSCs may be less sensitive to commutation failures. HVDC converters based on VSCs may, however, be more expensive and be less efficient than their thyristor-based CSC counterparts and instead be more sensitive to for example short-circuits.

Document WO 2015/057940 A1 discloses in figure 7 a system of several thyristor bridge rectifiers connected in series. The thyristor bridges are configured to operate in a bypass mode, which is for instance employed as soon as a DC fault is detected. NAVID R ZARGARI ET AL: "A Multilevel Thyristor Rectifier with Improved Power Factor" shows a similar system, where the system comprises several thyristor bridges in series and wherein each bridge can be bypassed via a gate-turn-off switch. Finally, OMAR KOTB ET AL: "A hybrid HVDC transmission system supplying a passive load" discloses the solution used commonly in the art, i.e. the use of a surge arrester across the CSC rectifier. This surge arrester limits the overvoltage caused due to the fault on the AC side of the converter. Z

In light of the above, there is therefore a need for improved power transmission systems and methods.

### Summary

To at least partially fulfil the above requirements, the present disclosure seeks to provide at least an improved method and an improved system related to fault handling in DC power transmission between AC systems.

To achieve this, a method and a power transmission system as defined in the independent claims are provided. Further embodiments of the present disclosure are provided in the dependent claims.

According to a first aspect of the present disclosure, there is provided a method for fault handling in DC power transmission between a first AC system and a second AC system. In the method, an occurrence of a phase-to-ground fault internal to a VSC may be detected. The VSC may be connected to the second AC system, and the VSC may be operated as an inverter in order to convert from DC to AC. Upon detecting the occurrence of the phase-to-ground fault, a bypass valve pair of a CSC may be fired. The CSC may be connected to the first AC system, and the CSC may be operated as a rectifier in order to converter from AC back to DC again.

By firing the bypass valve pair in the CSC, the overvoltage during the phase-to-ground fault may be reduced or removed. When the thyristors in the fired bypass valve pair are conducting, the DC voltage across the CSC may become almost zero, and the DC pole voltage may be reduced rapidly. As a result of the DC voltage reduction across the CSC, the VSC may have no or less need of a driving source to charge up the cell voltage even during a severe earth fault. In this way, overvoltage due to the phase-to-ground fault (e.g. an internal VSC bus fault) may be avoided or limited. This may reduce the cost of the converter valves in the VSC (e.g. by limiting and/or reducing their required voltage ratings) and also limit and/or reduce operating losses.

In one embodiment, the firing of the bypass valve pair may be initiated by transmitting a message indicative of the occurrence of the phase-to-ground fault from the VSC to the CSC. The message may be for example a signal, and/or it may be transferred over e.g. a telecommunication link (or radio link).

In one embodiment, the CSC may be connected in series with at least one further CSC. The CSC may be connected closer to a DC transmission line than the at least one further CSC.

In one embodiment, the method may further include, upon detecting the occurrence of the phase-to-ground fault, firing a bypass valve pair of the at least one further CSC.

In one embodiment, firing a bypass valve pair of a CSC may include forcing at least two switches in the CSC connected to the same AC phase to conduct at a same time.

According to a second aspect of the present disclosure, there is provided a power transmission system which may include a CSC that is connectable to a first AC system, and a VSC that is connectable to a second AC system. The CSC may be operable at least as a rectifier, and the VSC may be operable at least as an inverter. The power transmission system may also include fault detection means that may be adapted to detect an occurrence of a phase-to-ground fault internal to the VSC. The fault detection means may output a signal indicative of the occurrence of the phase-to-ground fault. The power transmission system may further include processing means that are adapted to fire a bypass valve pair of the CSC in response to receiving the signal indicative of the occurrence of the phase-to-ground fault. The power transmission system may e.g. be a direct current, DC, power transmission system. The power transmission system may e.g. be a high-voltage DC, HVDC, power transmission system.

In one embodiment, the VSC may include a full bridge modular multilevel converter (FB MMC). In some embodiments, the VSC may include a half bridge modular multilevel converter (HB MMC), a cascaded two-level (CTL) converter or a hybrid VSC.

In one embodiment, the CSC may include a six-pulse bridge rectifier (e.g. a Graetz bridge rectifier), or a twelve-pulse bridge rectifier.

In one embodiment, the power transmission system may further include at least one further CSC that may be connected in series with the CSC.

In one embodiment, the CSC may be connected closer to a DC transmission line than the at least one further CSC. In this or other embodiments, one or more DC transmission lines may form part of the power transmission system.

In one embodiment, the processing means may be further adapted to fire a bypass valve pair of the at least one further CSC in response to receiving the signal indicative of the phase-to-ground fault.

In one embodiment, the power transmission system may further include at least one further VSC that may be connected in series with the VSC.

In one embodiment, the power transmission system may be a monopole system. The monopole system may have a ground return path, or a metallic return path. In this embodiment, the monopole system may be asymmetric (e.g. using one DC transmission line only).

In one embodiment, the power transmission system may be a bipolar transmission system. The bipolar system may have a ground return path, or a metallic return path, or be without any dedicated return path. The CSC and the VSC may be connected to a same pole of the bipolar, e.g. to a same DC transmission line.

In one embodiment, the CSC and the VSC may be arranged in different converter stations. The different converter stations may be arranged at different locations, separated by distances of for example a few or several kilometers.

The present disclosure relates to all possible combinations of features recited in the claims. Further, any embodiment described with reference to a method according to the first aspect may be combinable with any embodiment described with reference to a system according to the second aspect, or vice versa.

Further objects and advantages of the various embodiments of the present disclosure will be described below by means of exemplifying embodiments.

### Brief description of the drawings

Exemplifying embodiments will be described below with reference to the accompanying drawings, in which:
Figure 1 illustrates a schematic view of a power transmission system;
Figure 2 illustrates a schematic view of a power transmission system in accordance with embodiments of the present disclosure;
Figure 3 illustrates a schematic view of a voltage-source converter;
Figure 4 illustrates a schematic view of a current-source converter;
Figure 5 illustrates a schematic view of a power transmission system in accordance with embodiments of the present disclosure; and
Figure 6 illustrates a flowchart of a method in accordance with embodiments of the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the figures, the sizes of elements and regions may be exaggerated for illustrative purposes and, thus, are provided to illustrate the general structure of the embodiments.

### Detailed description

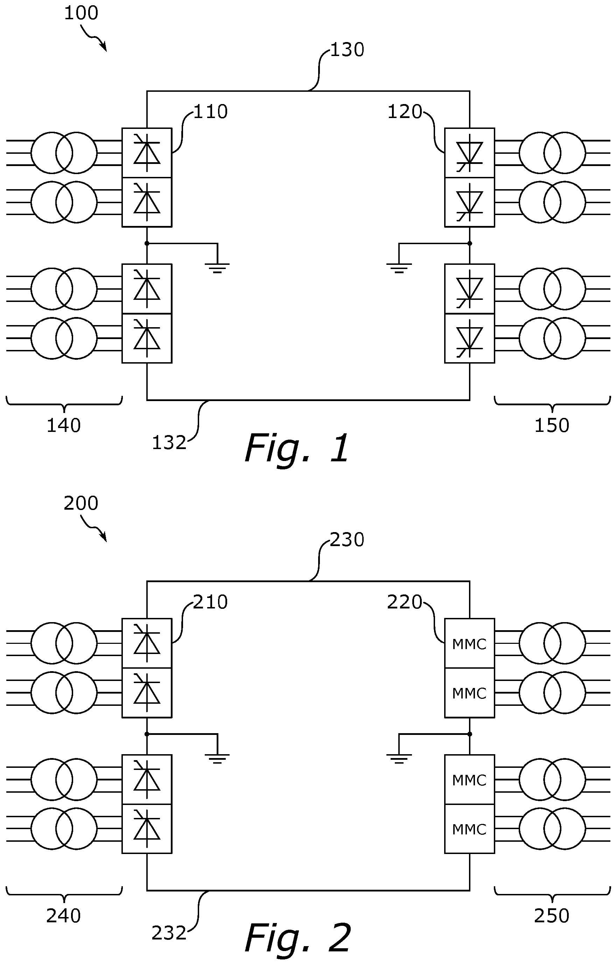

Figure 1 illustrates a power transmission system 100 in which DC power may be transferred from a first AC system 140 to a second AC system 150. The AC systems 140 and 150 contain a plurality of transformers which may be used to transform between lower and higher AC voltages as necessary. The transformers may in turn be connected to for example turbines, generators, motors or other components which provide and/or consume AC power. The AC system 140 may for example be part of a power plant, and the AC system 150 may for example be part of a city, town, or a factory which consumes the power generated by the power plant.

The power transmission system 100 is a bipolar transmission system, and uses a ground return path and two DC transmission lines 130 and 132. Each DC transmission line 130 and 132 represents one pole, and it may be assumed that e.g. the DC transmission line 130 is arranged to carry positive DC voltage while the DC transmission line 132 is arranged to carry negative DC voltage with respect to ground. The AC system 140 is connected, via transformers, to a plurality of CSCs 110 which are operated as rectifiers in order to convert from AC to DC. Some of the CSCs 110 are connected in series to the pole represented by DC transmission line 130, while some of the CSCs 110 are connected in series to the other pole, represented by DC transmission line 132. By using multiple converters connected in series, the power requirements of e.g. a transformer may be reduced, and the transformers may be built more compact which in turn may allow for easier transportation. Additionally, connecting multiple converters in series may also provide higher operational reliability and availability for the transmission system.

On the other side of the power transmission system 100, the DC power transmitted by the DC transmission lines 130 and 132 are converted back to AC power by multiple CSCs 120, operated as inverters, which in turn are connected to the second AC system 150. Some of the CSCs 120 are connected in series to the pole represented by DC transmission line 130, while other CSCs 120 are connected in series to the pole represented by DC transmission line 132. By connecting the CSCs 120 in series, the same benefits as for the transformers connected to the CSCs 110 may apply also to the transformers connected to the CSCs 120.

Exemplifying embodiments of the present disclosure will now be described more fully hereinafter with reference to Figures 2 to 5 in the accompanying drawings. These figures illustrate currently preferred embodiments, but the invention may, however, be embodied in many different forms and should not be construed as limited to the embodiments set forth herein; rather, these embodiments are provided for thoroughness and completeness, and fully convey the scope of the present disclosure to the skilled person.

With reference to Figure 2, an improved power transmission system in accordance with the present disclosure will be described in the following.

Figure 2 illustrates a power transmission system 200. The power transmission system 200 is bipolar with a ground return path, but it is also envisaged that the power transmission system 200 may have a metallic return path, or be without a dedicated return path, and that the power transmission system 200 may instead be a monopole transmission system. A monopole transmission system may for example be obtained by removing one of the DC transmission lines 230 and 232 and the components connected thereto.

A first AC system 240 is connected to the power transmission system 200 via CSCs 210 that are operated as rectifiers to convert from AC to DC. Two CSCs 210 are connected in series to the pole represented by DC transmission line 230, and two CSCs 210 are connected in series to the pole represented by DC transmission line 232. It is also envisaged that more than two CSCs may be connected in series to each pole, or that only a single CSC is connected to each pole. In some situations, it may be beneficial to connect an equal number of CSCs to each pole. In other situations, it may be beneficial to connect different numbers of CSCs to each pole.

On the other end of the DC transmission lines 230 and 232, the power transmission system 200 includes multiple VSCs 220. Two VSCs 220 are connected in series to the pole represented by DC transmission line 230, and two VSCs 220 are connected in series to the pole represented by DC transmission line 232. Like described earlier for the CSCs 210, other numbers (such as one, three, four or more) of VSCs may be connected between ground and each pole, and it may be envisaged to connect the same or different numbers of VSCs between ground and each pole. The VSCs 220 are modular multilevel converters, and may be for example full bridge modular multilevel converters (FB MMCs).

By combining the use of both CSCs 210 and VSCs 220, the power transmission system 200 may offer an overall optimal power transmission system in view of both cost, losses and reliability. Such a power transmission system may be applicable for e.g. bulk power transmissions with power in one direction during normal operation. If using CSCs on the inverter side, as illustrated in the power transmission system 100 in Figure 1, commutation failures (e.g. failures with valves not turning on or off as expected) may occur during e.g. an AC voltage dip, especially during inverter operation. Due to large penetration of DC transmission systems in a bulk AC grid, one such commutation failure may trigger commutation failure in other DC inverters. As a consequence, a cascaded chain of trip events may occur leading to unacceptable power system disturbances. By instead using VSCs 220, which has few or no problems with commutation failure, the risk of such a chain of events may be avoided or at least reduced.

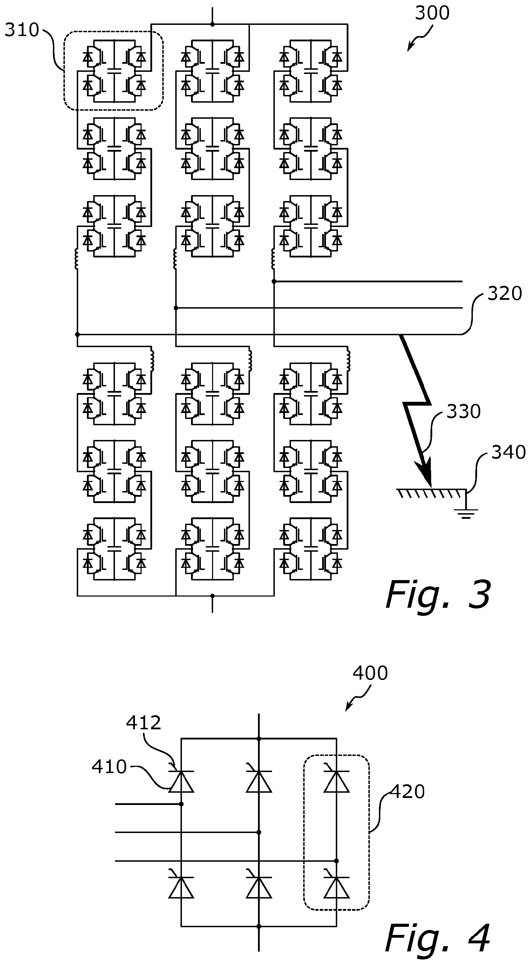

As will be described in in the following with reference to Figures 3, 4 and 5, a power transmission system in accordance with the present disclosure may further utilize the control capability of the CSCs in order to handle a phase-to-ground fault at a VSC. Such a fault may be internal to a VSC.

Figure 3 illustrates a voltage-source converter 300 in the form of a full bridge modular multilevel converter (FB MMC). The FB MMC (i.e. the VSC) 300 is constructed from a plurality of FB MMC sub-cells 310, each including four insulated-gate bipolar transistors (IGBTs) in an H-bridge configuration, freewheeling diodes connected across the IGBTs and a charge up capacitor. Several sub-cells 310 are connected in series to form a valve arm, and each valve arm is connected between each phase and a respective pole. Two valve arms connected to the same phase defines a valve leg, and the FB MMC 300 includes one valve leg for each phase.

In the FB MMC 300, conversion for three phases (i.e. three valve legs) are provided. Although the FB MMC 300 is illustrated as having three sub-cells 310 in each valve arm, it is envisaged that any other number of sub-cells may be used in each valve arm, and that two valve arms may contain a different number of sub-cells.

By turning the IGBTs in the respective sub-cells 410 off and on in a specific order, the desired AC voltage may be generated.

On the AC side of the VSC 300, a fault 330 may occur where e.g. an AC phase 320 is accidentally shorted to ground 340. Such a fault, referred to as a phase-to-ground fault, may cause an overvoltage across at least a valve arm of the VSC 300. Especially for high voltages (such as found in HVDC systems), such overvoltage may cause possible damage to the VSC 300 itself or to other components connected thereto. To handle or at least to reduce the dangers of such overvoltage, arrestors may be added to a VSC and connected across the valve arms. This may, however, come with an increase in cost, in operating losses and in size and/or weight of the valves and converters.

By using a FB MMC as a VSC, decoupling between the AC side voltage and the DC side voltage of the converter may be provided. This may in turn allow for series connection of multiple VSCs to the same pole, with the added benefits as those described earlier with reference to Figure 1. In addition, using a FB MMC as a VSC may provide an improved clearing of faults on the DC side of the converter.

Although the VSC 300 is illustrated as a FB MMC, it is also envisaged that other types of VSCs may be used. For example, a VSC may be a half-bridge MMC, a cascaded two-level (CTL) converter, or for example a hybrid VSC.

Figure 4 illustrates a CSC 400 in the form of a six-pulse bridge rectifier. The CSC 400 includes six switches 410 in the form of thyristors which may connect each of the phases to one of two poles. During normal operation, two thyristors 410, each connected to different poles and different phases, are conducting (i.e. turned on using gates 412) at any time, thereby connecting two of the three AC phase voltages to the DC poles. If needed, however, two thyristors 410 connected to different poles but to the same phase, forming a bypass valve pair 420, may be forced to conduct at the same time. When the switches (thyristors) in the bypass valve pair 420 are forced to conduct at the same time (that is, when the bypass valve pair 420 is "fired"), the CSC 400 is bypassed and the DC voltage across the CSC 400 may become zero or close to zero, thereby reducing amplitude of the DC voltage of the pole to which the CSC 400 is connected.

Although the CSC 400 is illustrated as a six-pulse bridge rectifier, it is envisaged that also other types of CSCs may be used in accordance with the present disclosure. For example, a twelve-pulse bridge rectifier (consisting of two series connected six-pulse bridge rectifiers) may be used. As long as a pair, or if necessary more than two, switches (e.g. thyristors) may be forced to conduct at the same time in order to bypass the CSC, any suitable CSC may be used.

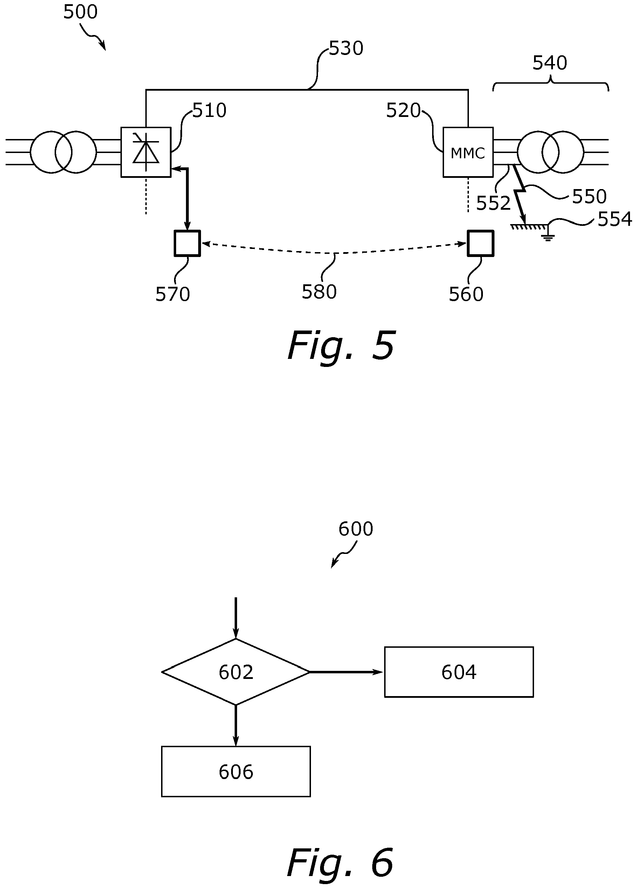

Figure 5 illustrates a power transmission system 500 in accordance with the present disclosure, in which the above described phase-to-ground fault may be handled by using the control capability of a CSC 510. The power transmission system 500 is here shown as having only a single CSC 510 and a single VSC 520 connected via a DC transmission line 530. It is, however, envisaged that more CSCs 510 and/or more VSCs 520 may be connected also, as illustrated in for example Figure 2.

The CSC 510 and the VSC 520 are connectable to a respective AC system (such as the shown transformers). The CSC 510 may be operated at least as a rectifier, and the VSC 520 may be operated at least as an inverter.

The power transmission system 500 may include fault detecting means 560 which may detect an occurrence of a phase-to-ground fault 550 between a phase 552 on the AC side 540 of the converter 520 and ground 554. Upon such a detection, the fault detection means 560 may output a signal (not shown) indicative of the occurrence of the phase-to-ground fault 550. The fault detection means 560 may in some embodiments for example be connected to a communication link 580 such as a tele-communication link (e.g. a wire, a wireless link, an optical link, a mechanical link, or similar), and the fault detection means 560 may use the link 580 to output the signal.

The power transmission system 500 may further include processing means 570 that may fire a bypass valve pair of the CSC 510 in response to receiving the signal indicative of the occurrence of the phase-to-ground fault 550. The processing means 570 may be connected to the link 580 in order to receive the signal. The processing means 570 may also be connected to the CSC 510 in order to fire the bypass valve pair. The processing means 570 may for example be directly connected to the switches (e.g. to the gates of thyristors) in the CSC 510, or be connected to additional suitable control means that may be located within the CSC 510 or connected thereto in order to fire the bypass valve pair.

By firing the bypass valve pair of the CSC 510, the DC voltage across the CSC 510 may be forced to zero or almost zero. By so doing, the amplitude of the DC voltage at the pole represented by the DC transmission line 530 may be reduced, which in turn will result in the VSC 520 having no driving source to charge up the cell voltage (e.g. the voltage over a charge up capacitor provided in the VSC 520). This may apply even during a severe earth fault, and an overvoltage as described earlier due to the phase-to-earth fault may be avoided. The need for additional arrestors provided at the VSC 520 may be reduced or avoided, and the power ratings of the VSC 520 may be limited or reduced. As a result, the cost and operating losses of/in the VSC 520 may be reduced.

In some embodiments, for reasons given in connection with the description of e.g. Figures 1 and 2, it is envisaged that multiple converters may be connected in series to a pole. It may often be required to use transformers to transform the resulting AC voltage. Such transformers are illustrated in Figure 5 as the pairs of overlapping circles. By connecting multiple converters in series to the same pole, the required voltage ratings of each transformer may be reduced and the transformers may be produced having smaller physical dimensions and/or weight. For HVDC systems, the maximum power rating of a transformer may for example be 600-800 MVA. This may help to reduce the cost of the transformers that are needed, reduce their required space for installation and make their transportation to/from a converter station more feasible. In addition, as described earlier, using multiple converters and transformers may help to increase the operational reliability and availability for the transmission system. This may be important for ultra-high DC voltage transmission systems.

If multiple converters are connected in series to a pole, it may be advantageous to fire a bypass pair in the CSC that is closest to the pole (i.e. the CSC that is closest to the DC transmission line).

As an example, in a system with only one VSC connected to a pole, the voltage across the arm of the VSC will be dimensioned corresponding to the DC pole voltage. In a system with two VSCs connected in series to the pole, the voltage across the arm of a VSC will be dimensioned corresponding to half of the DC pole voltage during normal operation. However, during a phase-to-ground fault between e.g. a converter and a transformer, the VSC near the pole will be subjected to the same fault voltage as if it was the only converter connected to that pole, while the VSC further away from the pole (e.g. near neutral) will not. Similarly, if there are three VSCs connected in series to the pole, the voltage across the arm of a VSC will be dimensioned corresponding to one third of the DC pole voltage during normal operation. During a phase-to-ground fault, the VSC near the pole will be subjected to the same fault voltage as if it was the only converter connected to the pole, while the other VSCs will not. Thus, firing a bypass valve pair in a CSC may be sufficient to reduce the pole voltage to half. If there, for example, are two series connected VSCs and two series connected CSCs, and the fault is at the upper VSC, the bypass valve pair of the CSC closest to the pole may be fired.

In some embodiments, a VSC for which a phase-to-earth fault is detected and a corresponding CSC in which a bypass valve pair is fired may be located within the same converter station, e.g. within a same building. In some embodiments, it is envisaged that the VSC and the corresponding CSC are located within different converter stations, and that these converter stations may be separated even by larger distances.

The DC power transmission systems described herein may be HVDC systems. A HVDC system may for example be a system in which voltage is above 500 kV.

With reference to Figure 6, a method of fault handling in accordance with the present disclosure will now be described.

Figure 6 illustrates a flowchart of a method 600 for fault handling in DC power transmission between a first AC current system and a second AC system. In a first step 602, the method 600 may include detecting an occurrence of a phase-to-ground fault on an AC side of a VSC that is connected to the second AC system and operated as an inverter. Upon detecting the occurrence of the phase-to-ground fault, the method 600 may proceed (step 604) with firing a bypass valve pair of a CSC that may be connected to the first AC system and operated as a rectifier. If an occurrence of a phase-to-ground fault is not detected, the method may proceed with a step 606 in which normal operation of the power transmission system is performed, for example by performing normal firing of the switches of the CSC as would be done during normal conversion operation of the CSC.

By combining the use of one or more CSCs on the rectifier side and one or more VSCs on the inverter side of a DC power transmission system, a power transmission system as described in the present disclosure may offer an overall optimal system in view of both cost, losses and reliability. Such a power transmission system may be applicable for e.g. bulk power transmissions with power in one direction during normal operation. VSCs on the inverter side may help to reduce or eliminate the risk of commutation failures, while use of CSCs on the rectifying side may improve costs and efficiency. By using the control capability of the CSC, firing of a bypass valve pair in the CSC may help to handle an eventual phase-to-ground fault occurring at (and internal or external to) a VSC, and the possibility of series-connecting multiple converters per pole per side of the transmission system may help to further reduce cost, reliability and availability of the system.

The steps of any method disclosed herein do not necessarily have to be performed in the exact order disclosed, unless explicitly stated to the contrary.

The person skilled in the art realizes that the present disclosure is by no means limited to the embodiments described above. On the contrary, many modifications and variations are possible within the scope of the appended claims.

Although features and elements are described above in particular combinations, each feature or element may be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A method for phase-to-ground fault handling in a direct current, DC, power transmission system configured to transmit DC power between a first alternating current, AC, system and a second AC system, wherein the system includes a current-source converter, CSC, connected to the first AC system and operating as a rectifier on a rectifier side of the DC power transmission system, and a voltage-source converter, VSC, connected to the second AC system and operating as an inverter on an inverter side of the DC power transmission system, said method comprising the steps of:
detecting an occurrence of a phase-to-ground fault internal to the VSC, and
upon detecting the occurrence of the phase-to-ground fault, firing a bypass valve pair of the CSC for reducing or removing an overvoltage across at least a valve arm of the VSC,
wherein firing a bypass valve pair of a CSC comprises forcing at least two switches in the CSC connected to the same AC phase to conduct at a same time.

2. The method of claim 1, wherein the firing of the bypass valve pair is initiated by transmitting a message indicative of the occurrence of the phase-to-ground fault over a telecommunication link.

3. The method of claim 1 or 2, wherein the CSC is connected in series with at least one further CSC, and wherein the CSC is connected closer to a DC transmission line than the at least one further CSC.

4. The method of claim 3, further comprising, upon detecting the occurrence of the phase-to-ground fault, firing a bypass valve pair of the at least one further CSC to further reduce the amplitude of the DC voltage across the VSC.

5. A power transmission system for transmitting DC power between a first alternating current, AC, system and a second AC system, comprising:
a current-source converter, CSC, connectable to the first AC system and operable at least as a rectifier;
a voltage-source converter, VSC, connectable to the second AC system and operable at least as an inverter;
fault detection means adapted to detect an occurrence of a phase-to-ground fault internal to the VSC and to output a signal indicative of the occurrence of the phase-to-ground fault, and
processing means adapted to fire a bypass valve pair of the CSC for reducing or removing an overvoltage across at least a valve arm of the VSC in response to receiving the signal indicative of the occurrence of the phase-to-ground fault, wherein firing a bypass valve pair of a CSC comprises forcing at least two switches in the CSC connected to the same AC phase to conduct at a same time.

6. The power transmission system of claim 5, wherein the VSC comprises a full bridge modular multilevel converter, FB MMC, a half bridge modular multilevel converter, HB MMC, a cascaded two-level, CTL, converter or a hybrid VSC.

7. The power transmission system of claim 5 or 6, wherein the CSC comprises a six-pulse bridge rectifier or a twelve-pulse bridge rectifier.

8. The power transmission system of any one of claims 5 to 7, further comprising at least one further CSC connected in series with the CSC.

9. The power transmission system of claim 8, wherein the CSC is connected closer to a direct current, DC, transmission line than the at least one further CSC.

10. The power transmission system of claim 8 or 9, wherein the processing means are further adapted to, as a response to receiving said signal, fire a bypass valve pair of the at least one further CSC.

11. The power transmission system of any one of claims 5 to 10, further comprising at least one further VSC connected in series with the VSC.

12. The power transmission system of any one of claims 5 to 11, wherein the system comprises several converter stations and wherein the CSC and the VSC are arranged in different converter stations.

13. The power transmission system of any one of claims 5 to 12, said power transmission system being a bipolar power transmission system, and wherein the CSC and the VSC are connected to a same pole.

## Patentansprüche

1. Verfahren zur Handhabung von Phasen-Erdschlussfehlern in einem Gleichstromübertragungssystem, das dazu ausgelegt ist, Gleichstrom zwischen einem ersten Wechselstromsystem und einem zweiten Wechselstromsystem zu übertragen, wobei das System einen Stromquellenwandler, CSC ("Current Source Converter"), beinhaltet, der an das erste Wechselstromsystem angeschlossen ist und als Gleichrichter auf einer Gleichrichterseite des Gleichstromübertragungssystems arbeitet, und einen Spannungsquellenwandler, VSC ("Voltage Source Converter"), der an das zweiten Wechselstromsystem angeschlossen ist und als Wechselrichter auf einer Wechselrichterseite des Gleichstromübertragungssystems arbeitet, wobei das Verfahren die folgenden Schritte umfasst:
Detektieren eines Vorkommens eines VSC-internen Phase-Erdschlusses und
nach dem Erkennen des Vorkommens des Phase-Erdschlusses, Auslösen eines Bypassventilpaares des CSC zur Reduzierung oder Beseitigung einer Überspannung an mindestens einem Ventilarm des VSC,
wobei das Auslösen eines Bypassventilpaares eines CSC das Erzwingen des gleichzeitigen Leitens von mindestens zwei Schaltern im CSC, die an die gleiche Wechselstromphase angeschlossen sind, umfasst.

2. Verfahren nach Anspruch 1, wobei das Auslösen des Bypassventilpaares durch Übertragen einer Nachricht, die für das Vorkommen des Phase-Erdschlussfehlers kennzeichnend ist, über eine Telekommunikationsverbindung eingeleitet wird.

3. Verfahren nach Anspruch 1 oder 2, wobei der CSC mit mindestens einem weiteren CSC in Reihe geschaltet ist, und wobei der CSC näher an eine Gleichstromübertragungsleitung angeschlossen ist als der mindestens eine weitere CSC.

4. Verfahren nach Anspruch 3, ferner umfassend, dass nach dem Detektieren des Vorkommens des Phase-Erdschlusses ein Bypassventilpaar des mindestens einen weiteren CSC ausgelöst wird, um die Amplitude der Gleichspannung über dem VSC weiter zu reduzieren.

5. Stromübertragungssystem zum Übertragen von Gleichstrom zwischen einem ersten Wechselstromsystem, und einem zweiten Wechselstromsystem, umfassend:
einem Stromquellenwandler, CSC, der an das erste Wechselstromsystem anschließbar und mindestens als Gleichrichter betreibbar ist;
einem Spannungsquellenwandler, VSC, der an das zweite Wechselstromsystem anschließbar und mindestens als Wechselrichter betreibbar ist;
Fehlerdetektionsmittel, die angepasst sind, um ein Vorkommen eines VSC-internen Phase-Erdschlusses zu detektieren und ein Signal auszugeben, das für das Vorkommen des Phasen-Erdschlussfehlers kennzeichnend ist, und
Verarbeitungsmittel, die angepasst sind, um ein Bypassventilpaar des CSC auszulösen, um eine Überspannung über mindestens einen Ventilarm des VSC als Reaktion auf den Empfang des Signals, das für das Vorkommen des Phasen-Erdschlussfehlers kennzeichnend ist, zu reduzieren oder zu entfernen, wobei das Auslösen eines Bypassventilpaares eines CSC das Erzwingen des gleichzeitigen Leitens von mindestens zwei Schaltern im CSC, die an dieselbe Wechselstromphase angeschlossen sind, umfasst.

6. Stromübertragungssystem nach Anspruch 5, wobei der VSC einen modularen Vollbrücken-Mehrpegelwandler, FB MMC ("Full Bridge Modular Multilevel Converter"), einen modularen Halbbrücken-Mehrpegelwandler, HB MMC ("Half Bridge Modular Multilevel Converter"), einen kaskadierten Zweipegelwandler, CTL ("Cascaded Two-Level Converter"), oder einen hybriden VSC umfasst.

7. Stromübertragungssystem nach Anspruch 5 oder 6, wobei der CSC einen Sechspuls-Brückengleichrichter oder einen Zwölfpuls-Brückengleichrichter umfasst.

8. Stromübertragungssystem nach einem der Ansprüche 5 bis 7, ferner umfassend mindestens eine weitere CSC, die mit der CSC in Reihe geschaltet ist.

9. Stromübertragungssystem nach Anspruch 8, wobei der CSC näher an eine Gleichstrom-Übertragungsleitung angeschlossen ist als der mindestens eine weitere CSC.

10. Stromübertragungssystem nach Anspruch 8 oder 9, wobei die Verarbeitungsmittel ferner angepasst sind, um als Reaktion auf den Empfang des Signals ein Bypassventilpaar des mindestens einen weiteren CSC auszulösen.

11. Stromübertragungssystem nach einem der Ansprüche 5 bis 10, ferner umfassend mindestens eine weitere VSC, die mit der VSC in Reihe geschaltet ist.

12. Stromübertragungssystem nach einem der Ansprüche 5 bis 11, wobei das System mehrere Wandlerstationen umfasst und wobei der CSC und der VSC in verschiedenen Wandlerstationen angeordnet sind.

13. Stromübertragungssystem nach einem der Ansprüche 5 bis 12, wobei das Stromübertragungssystem ein bipolares Stromübertragungssystem ist und wobei der CSC und der VSC an einen gemeinsamen Pol angeschlossen sind.

## Revendications

1. Procédé de gestion de défaut phase vers terre dans un système de transmission de puissance en courant continu, CC, configuré pour transmettre une puissance CC entre un premier système en courant alternatif, CA, et un deuxième système CA, le système contenant un convertisseur de source de courant, CSC, relié au premier système CA et fonctionnant comme redresseur sur un côté redresseur du système de transmission de puissance CC, et un convertisseur de source de tension, VSC, relié au deuxième système CA et fonctionnant comme inverseur sur un côté inverseur du système de transmission de puissance CC, ledit procédé comprenant les étapes consistant à :
détecter une apparition d'un défaut phase vers terre interne au VSC, et
lors de la détection de l'apparition du défaut phase vers terre, déclencher une paire de valves de dérivation du CSC pour réduire ou éliminer une surtension aux bornes d'au moins un bras de valve du VSC,
le déclenchement d'une paire de valves de dérivation d'un CSC comprenant le forçage d'au moins deux commutateurs du CSC reliés à la même phase CA pour les faire conduire en même temps.

2. Procédé selon la revendication 1, dans lequel le déclenchement de la paire de valves de dérivation est lancé par la transmission d'un message indiquant l'apparition du défaut phase vers terre sur une liaison de télécommunications.

3. Procédé selon la revendication 1 ou 2, dans lequel le CSC est relié en série à au moins un autre CSC, et dans lequel le CSC est branché plus près d'une ligne de transmission CC que ledit au moins un autre CSC.

4. Procédé selon la revendication 3, comprenant également, lors de la détection de l'apparition du défaut phase vers terre, le déclenchement d'une paire de valves de dérivation dudit au moins un autre CSC pour réduire davantage l'amplitude de la tension CC aux bornes du VSC.

5. Système de transmission de puissance servant à transmettre une puissance CC entre un premier système en courant alternatif, CA, et un deuxième système CA, comprenant :
un convertisseur de source de courant, CSC, pouvant être relié au premier système CA et pouvant fonctionner comme redresseur ;
un convertisseur de source de tension, VSC, pouvant être relié au deuxième système CA et pouvant fonctionner au moins comme inverseur ;
un moyen de détection de défaut conçu pour détecter une apparition d'un défaut phase vers terre interne au VSC et pour émettre un signal indiquant l'apparition du défaut phase vers terre, et
des moyens de traitement conçus pour déclencher une paire de valves de dérivation du CSC pour réduire ou éliminer une surtension aux bornes d'au moins un bras de valve du VSC en réponse à la réception du signal indiquant l'apparition du défaut phase vers terre, le déclenchement d'une paire de valves de dérivation comprenant le forçage d'au moins deux commutateurs du CSC reliés à la même phase CA pour les faire conduire en même temps.

6. Système de transmission de puissance selon la revendication 5, dans lequel le VSC comprend un convertisseur modulaire multiniveau en pont complet, FB MMC, un convertisseur modulaire multiniveau en demi-pont, HB MMC, un convertisseur en cascade à deux niveaux, CTL ou un VSC hybride.

7. Système de transmission de puissance selon la revendication 5 ou 6, dans lequel le CSC comprend un redresseur en pont à six impulsions ou un redresseur en pont à douze impulsions.

8. Système de transmission de puissance selon l'une quelconque des revendications 5 à 7, comprenant également au moins un autre CSC relié en série au CSC.

9. Système de transmission de puissance selon la revendication 8, dans lequel le CSC est branché plus près d'une ligne de transmission à courant continu, CC, que ledit au moins un autre CSC.

10. Système de transmission de puissance selon la revendication 8 ou 9, dans lequel les moyens de traitement sont également conçus pour, en réponse à la réception dudit signal, déclencher une paire de valves de dérivation dudit au moins un autre CSC.

11. Système de transmission de puissance selon l'une quelconque des revendications 5 à 10, comprenant au moins un autre VSC relié en série au VSC.

12. Système de transmission de puissance selon l'une quelconque des revendications 5 à 11, le système comprenant plusieurs stations de conversion, et le CSC et le VSC étant agencés dans différentes stations de conversion.

13. Système de transmission de puissance selon l'une quelconque des revendications 5 à 12, ledit système de transmission de puissance étant un système de transmission de puissance bipolaire, et le CSC et le VSC étant reliés à un même pôle.
